# EUROPÄISCHE PATENTSCHRIFT

(11) **EP 2 410 035 B1**
(45) Veröffentlichungstag und Bekanntmachung des Hinweises auf die Patenterteilung: **06.05.2020**
(21) Anmeldenummer: 10007555.5
(22) Anmeldetag: 21.07.2010
(51) Int. Cl.: C10B 49/02, C10B 53/02

(54) **Verfahren und Vorrichtung zur Carbonisierung von Biomasse mit Dampfsteuerung**
Method and device for carbonation of biomass with steam control
Procédé et dispositif de carbonisation de biomasse à l'aide d'une commande de vapeur

(43) Veröffentlichungstag der Anmeldung: 25.01.2012
(73) Patentinhaber: Revatec GmbH, 48455 Bad Bentheim (DE)
(72) Erfinder: Schlitt, Rainer, 36326 Antrifttal (DE); Richarts, Fritz, Prof., 52223 Stolberg (DE)
(74) Vertreter: Rausch Wanischeck-Bergmann Brinkmann

(56) Entgegenhaltungen:
- EP-A1- 1 894 640
- WO-A1-03/024633
- WO-A2-03/025101
- WO-A2-2008/138637
- Jochen Buschle: "Latent heat storage for Process Heat Applications", , 2 June 2006 (2006-06-02), XP55439435, Retrieved from the Internet: URL:https://intraweb.stockton.edu/eyos/ene rgy_studies/content/docs/FINAL_PRESENTATIO NS/14B-4.pdf [retrieved on 2018-01-10]

## Beschreibung

Die vorliegende Erfindung betrifft ein Verfahren und eine Vorrichtung zur Carbonisierung von Biomasse in einem Reaktionsraum unter Verwendung von Dampf zur Bereitstellung der erforderlichen Temperaturen und Drücke.

Die Carbonisierung von Biomasse ist grundsätzlich im Stand der Technik bekannt.

Unter der Bezeichnung "Hydrothermale Carbonisierung" sind umfangreich Verfahren zur Carbonisierung von Biomasse bekannt. Die Rohbiomasse, beispielsweise bestehend aus Pflanzenresten, Holzresten oder sonstigen biologischen Grundstoffen wird zerkleinert. Dabei haben sich Partikelgrößen von beispielsweise 5 bis 50 mm Länge als geeignet herausgestellt. Unter Verwendung von Wasser, Druck und Temperatur wird die Biomasse in einen druckdichten Behälter erhitzt. Temperaturen um 180°C sind durchaus üblich. Chemische Katalysatoren, wie beispielsweise Zitronensäure oder dergleichen sind an sich bekannt. Die Erwärmung erfordert eine Energiezufuhr von außen, wozu herkömmliche Systeme wie Thermalölsysteme, Heißwasserheizanlagen, Hochdruckdampfanlagen oder dergleichen einsetzbar sind. Der Prozess an sich erreicht eine exotherme Phase, was zu einer weiteren Temperaturerhöhung im Reaktionsraum führt. In dieser Phase ist es wichtig, einen zu großen Temperatur- und damit verbundenen Druckanstieg im Reaktionsraum zu verhindern. Hierzu kann unter anderem Kühlung eingesetzt werden, was jedoch wiederum Energieeinsatz erfordert.

Während im Stand der Technik die Entwicklung kontinuierlicher Verfahren im Mittelpunkt steht, werden fallweise auch diskontinuierliche Verfahren in Betracht gezogen. Die Neuerungen beziehen sich in der Regel nur auf konstruktive Details oder auf spezielle Lösungen in Bezug auf die Steuerung und die Regelung des Verfahrensablaufes.

Allen gemeinsam ist eine Realisierung des Verfahrens in der Flüssigphase, das heißt, die Biomasse ist vollständig mit Wasser umhüllt. Dadurch ergibt sich das Problem, dass sowohl die Biomasse als auch die Prozessmedienströme miteinander vermischt bzw. gekoppelt sind und sich eine Reihe von Einschränkungen in der verfahrenstechnischen Umsetzung und der energetischen Effizienz ergeben.

Zum einen muss der mechanische Transport der Biomasse durch das Reaktionssystem bzw. die Gesamtanlage bewerkstelligt werden. Darüber hinaus lässt sich die genaue Ortslage der endothermen bzw. exothermen Reaktionszone nicht exakt bestimmen, was erheblichen verfahrenstechnischen Aufwand nach sich zieht, um die mögliche unkontrollierbare starke Erhitzung (sog. Hitzenester) zu handhaben. Zudem wird die Temperatursteuerung sowie die Auskopplung der überschüssigen Reaktionswärme aus dem Reaktor erschwert. Schließlich ist der Massenstrom durch das beigefügte Wasser erhöht.

Diesbezüglich ist aus dem Stand der Technik beispielsweise die WO 2008/138637 A2 bekannt, welche ein Verfahren zur Prozessführung einer Anlage zur hydrothermalen Cabonisierung von Biomasse und eine dafür geeignete Vorrichtung offenbart. Ein Reaktorraum wird mit einer Dampfspeichereinheit strömungstechnisch verbindbar betrieben, und je nach Verfahrensphase mit Dampf vom Reaktorraum in den Speicher oder von dem Speicher in den Reaktorraum geleitet. Dieses Verfahren sieht vor, dass während der exothermen Reaktion im Reaktorraum Dampf in den Dampfspeicher überführt wird, um die bei der exothermen Reaktion freiwerdenden Wärme speichern zu können. In einem späteren Verfahrensschritt wird die in dem Dampfspeicher gespeicherte Wärme mittels des Dampfs wieder in den Reaktorraum zurückgeführt, um zur Vorwärmung von Biomasse in einem folgenden Prozesszyklus zu dienen.

Die vorliegende Erfindung zielt darauf ab, Energieströme und Medienströme (Heizmittel, Prozesswasser usw.) von den Stoffströmen (Biomasse und Biokohle) soweit zu entkoppeln, dass eine nachhaltige Verbesserung in der Verfahrensführung sowie der energetischen Effizienz erreicht, der Einsatz chemischer Hilfsmittel (Katalysatoren) vermieden, der Abwasseranfall reduziert sowie die Produktionszeit optimiert wird. Der vorliegenden Erfindung liegt die Aufgabe zugrunde, das Verfahren zur Carbonisierung von Biomasse dahingehend zu verbessern, dass es präziser steuerbar ist, eine verbesserte Energie- und Umweltbilanz erreicht und darüber hinaus den Produktionszeitaufwand optimiert.

Zur technischen Lösung dieser Aufgabe wird das Verfahren mit den Merkmalen des Patentanspruches 1 vorgeschlagen. Weitere Vorteile und Merkmale sind in den Unteransprüchen gekennzeichnet. Vorrichtungsseitig wird die Erfindung gelöst durch eine Vorrichtung mit den Merkmalen des Anspruches 7. Auch hier ergeben sich weitere Vorteile und Merkmale aus dem Unteranspruch 8.

Mit der Erfindung wird vorgeschlagen, dass der Reaktionsraum mit wenigstens zwei Ruthsspeichem als Dampf-Speichereinheiten strömungstechnisch verbindbar ist. Diese Dampfspeichereinheiten können sowohl zur Vorhaltung von Dampf verwendet werden, der dann schnell in den Reaktionsraum gelangen kann, als auch Dampf aus dem Reaktionsraum aufnehmen.

Durch die Verwendung der zwei Speichereinheiten wird das Verfahren in vielerlei Hinsicht optimierbar. Zum einen können erforderliche Temperaturen und Drücke sehr schnell eingestellt werden indem diese in den Speichereinheiten vorgelegt werden. Durch einfaches Öffnen eines Ventils kommt es dann zum Ausgleich zwischen Speichereinheit und Reaktionsraum, in dem dann in kürzester Zeit die gewünschte Atmosphäre hergestellt wird. Darüber hinaus können die Speichereinheiten zur Aufnahme von Dampf aus dem Reaktionsraum eingesetzt werden. Wenn die exotherme Phase Temperatur und Druck ansteigen lässt, kann durch gezieltes Ventilöffnen überschüssiger Dampf in die Speicher geführt werden. Diese Speicher werden auf diese Weise energiegünstig wiederaufgeladen, während die Atmosphäre im Reaktionsraum auf diese Weise sehr minutiös und äußerst umweltfreundlich gesteuert werden kann.

Das gilt insbesondere für die exotherme Reaktion, die sich in dieser Verfahrensweise problemlos beherrschen lässt.

Die Verwendung der Speicher, gemäß der Erfindung mit unterschiedlichen Drücken, ermöglichen eine Vielzahl von neuen Verfahrensvarianten. Es können Druckniveaus über den zeitlichen Verlauf des Prozesses festgelegt und exakt eingehalten werden. Durch die Verwendung der außerhalb des Reaktionsraumes liegenden und strömungstechnisch mit diesen verbindbaren und damit auch von diesen trennbaren Speicher kann der Dampfhaushalt - bezogen auf den Prozess - sehr exakt geführt werden. Darüber hinaus ist das System geschlossen und damit umweltfreundlich. Weiterhin ist es energiefreundlich, da die in der exothermen Reaktion frei werdende Energie direkt für den Prozess selbst genutzt werden kann. Ist der Speicher wieder aufgeladen, kann er entweder für den nächsten Carbonisierungsvorgang verwendet werden oder im gleichen Carbonisierungsvorgang zum Ausgleich von verfahrensgemäßen Druckschwankungen.

Mit einem vorteilhaften Vorschlag der Erfindung wird vorgeschlagen, dass mindestens drei Speichereinheiten verwendet werden, die gemäß einem weiteren vorteilhaften Vorschlag der Erfindung jeweils mit unterschiedlichem Druck betrieben werden können. Auf diese Weise ist es möglich, Druckstufen vorzuhalten, so dass der Prozess optimiert bedient werden kann. Beim Abzug von Dampf in die Speicher wird zunächst gemäß einem Vorschlag der Erfindung der Speicher bedient, in dem der höchste Druck vorgegeben ist. Ist dieser Speicher voll, wird der nächstniedrigere Druckspeicher bedient usw. Im Rahmen der Erfindung kann abschließend überschüssiger Dampf gegebenenfalls auch weiterverwendet werden, um beispielsweise gelagerte Biomasse vorzubehandeln oder dergleichen. Sind die Speicher voll, wird weiterhin entstehender überschüssiger Dampf abgeführt und gegebenenfalls einer weiteren Verwendung zugeführt.

Gemäß einem weiteren vorteilhaften Vorschlag der Erfindung werden mindestens zwei Reaktionsräume betrieben. Diese können direkt oder indirekt über die Speichereinheiten strömungstechnisch miteinander verbunden sein. Diese erfindungsgemäße Ausgestaltung ermöglicht einen sogenannten Batchbetrieb, d.h. die Biomasse wird diskontinuierlich in den Reaktionsbehälter eingebracht und die durch die Carbonisierung entstandene Biokohle wieder ausgebracht. Durch diese Entkoppelung der Stoffströme von den Medien- und Energieströmen entfällt die Aufgabe, die Biomasse kontinuierlich durch das Reaktionssystem zu führen. Die Dampfvorlage aus den Speichern wird verwendet, um den Prozess in einem der Reaktionsräume zu starten und durchzuführen. Zeitlich versetzt wird dann der zweite Reaktor in Betrieb gesetzt. Der Zeitpunkt wird so gewählt, dass der Speicher mit dem jeweils erforderlichen Druck gefüllt ist und somit zum Einsatz kommen kann. Wenn dann bei dem zweiten Reaktionsraum die hohen Drücke erforderlich werden, ist dies zeitlich so gesteuert, dass in den ersten Reaktor die exothermen Reaktionen zur Erzeugung hoher Drücke führen. Mit dem Verfahren nach Anspruch 5 kann ein quasikontiniuerlicher Prozess in Bezug auf die Medienströme und Energieströme erreicht werden bei einem diskontinuierlichen (Batch-)Betrieb in Bezug auf die Stoffströme. Dieses System lässt sich um weitere Einheiten erweitern, um auf diese Weise den Produktionsoutput entsprechend zu erhöhen. Zusätzlich wird mit steigender Anzahl der Einheiten der Gesamtablauf hinsichtlich der Medien- und Energieströme weiter verstetigt, d.h. in einen kontinuierlichen Betrieb überführt. Mit der Erfindung wird vorgeschlagen, dass als Speichereinheiten sogenannte Ruthsspeicher verwendet werden.

Diese Speicher sind an sich bekannte Dampfspeicher, die eine besonders gute Ansteuerung ermöglichen. Diese Speicher sind mit dem Reaktionsraum oder den Reaktionsräumen über Rohrleitungen verbunden, die über ansteuerbare Ventile laufen. Auf diese Weise können die strömungstechnischen Verbindungen gesteuert hergestellt und gesteuert unterbrochen werden. Auch können die Speicher selbst untereinander in gleicher Weise in Verbindung gebracht werden, um den Dampfhaushalt noch weiter zu optimieren.

Mit einem vorteilhaften Vorschlag der Erfindung wird eine optimale Systemausgestaltung unter Verwendung von mindestens zwei Reaktionsräumen und mindestens drei Ruthsspeichern vorgeschlagen, die verfahrenstechnisch und unter dem Gesichtspunkt der Energiebilanz optimiert betreibbar ist.

Die Erfindung stellt ein einfach durchführbares Verfahren und eine konkret aufrüstbare Einheit bereit, mit welcher durch die Entkoppelung der Medien- und Energieströme von den Stoffströmen Produktionsoutput, Produktionsauslastung, Energiehaushalt und die Führung der Prozessmedien optimiert sind.

Zudem wird mit dem in der Erfindung beschriebenen System Abwasser dadurch nachhaltig vermindert sowie der Einsatz von Katalysatoren obsolet, dass
a) anfallendes Kondensat über eine Konditionierung als Ersatz für die Zugabe eines ansonsten notwendigen Katalysators (z.B. Zitronensäure) zurückgeführt wird, und
b) auf die Flüssigphase bei der Reaktion verzichtet wird, wodurch der Gesamtwasserumsatz des Prozesses auf den natürlichen Wassergehalt der Biomasse zuzüglich des Kondensates aus dem zugeführten (Heiz-)Dampf reduziert wird.

Weitere Vorteile und Merkmale der Erfindung ergeben sich aus der folgenden Beschreibung anhand der Figuren. Dabei zeigen:
- Fig. 1:: eine schematische Darstellung eines Ausführungsbeispiels für einen patentgemäßen Aufbau einer Carbonisierungsanlage;
- Fig. 2: die Darstellung eines Druck-Zeit-Diagramms für einen Prozessablauf gemäß einem Ausführungsbeispiel der Erfindung und
- Fig. 3: ein Ausschnitt aus einem Druck-Zeit-Diagramm bei Betrieb einer Anlage gemäß Fig. 1.

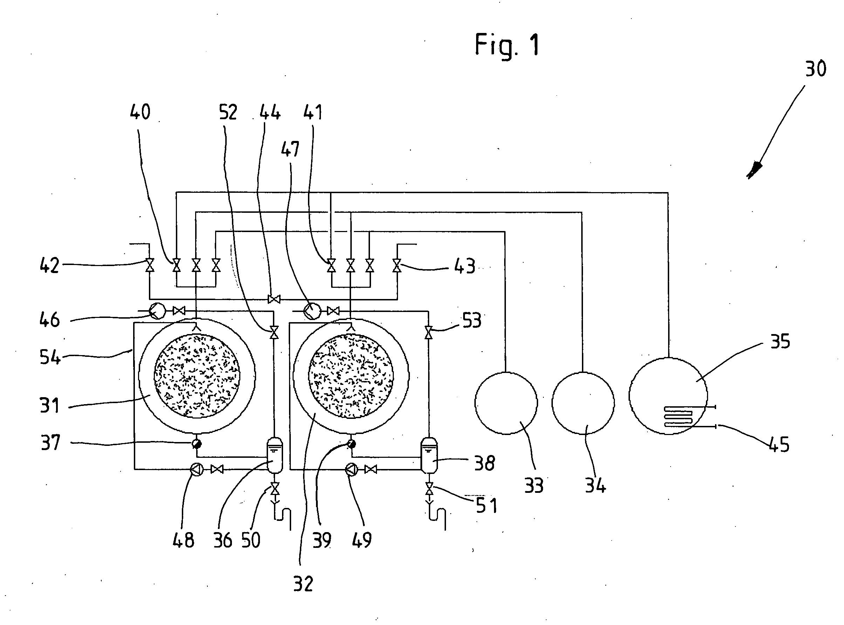

Bei dem in Fig. 1 gezeigten Ausführungsbeispiel für eine Auslegung der Kernbaugruppe einer Carbonisierungseinheit 30 sind zunächst im gezeigten Ausführungsbeispiel zwei Reaktorräume 31, 32 gezeigt, sogenannte Autoklaven. Weiterhin sind Dampfspeicher 33, 34 und 35 gezeigt, wobei im Speicher 35 beispielhaft und symbolisch ein Heizmittelanschluss 45 gezeigt ist. Auch die anderen Speicher, beispielsweise Ruthsspeicher 33, 34 können natürlich mit entsprechenden Heizmittelanschlüssen versehen sein. Die Speicher 33, 34, 35 sind über die Ventilgruppe 40 jeder für sich mit dem Reaktorraum 31 verbindbar. Über die Ventilgruppe 41 lässt sich die Verbindung der drei Speicher 33, 34, 35 mit dem Reaktorraum 32 jeweils herstellen.

Beide Reaktorräume sind darüber hinaus mit Auslassventilen für Überschussdampf 42, 43 versehen und miteinander über das Ventil 44 verbunden.

Auf diese Weise kann durch einfache Steuerung der Ventile eine optimale Dampfführung zu jedem der Reaktorräume 31, 32 gesteuert erfolgen. Der Reaktorraum 31 weist einen Kondensatableiter 37 auf. Dieser führt in einen Kondensatbehälter 36, der einerseits über ein Ventil 52 absperrbar ist, andererseits über ein Ventil 50 abgeschlemmt werden kann. Die Kondensatumwälzpumpe 48 ist ebenfalls mit einem vorgeschalteten Ventil betrieben und kann das Kondensat in den Reaktorraum rückführen, wie dies durch Leitung 54 angedeutet ist. Das im Reaktorraum anfallende Kondensat hat - u. a. verursacht durch die Prozessführung mit Dampf und den Verzicht auf eine vollständige Flutung der Biomasse in Flüssigkeit - einen ausgeprägt sauren Charakter. Durch die Rückführung in den Reaktorraum und durch Aufsprühen auf die reagierende Biomasse übernimmt es die Funktion des chemischen Katalysators, der in gemäß dem Stand der Technik betriebenen Carbonisierungsanlagen beigegeben werden muss. Mit der erfindungsgemäßen Verfahrensweise wird der Einsatz von reaktionsunterstützenden und die Umwelt gegebenenfalls belastenden Chemikalien vermieden.

In völliger baugleicher Weise ist auch der Reaktorraum 32 mit dem Kondensatbehälter 38 versehen, der über Ventil 53 absperrbar ist. Über Ventil 51 ist der Kondensatbehälter 38 abschlemmbar, die Kondensatumwälzpumpe 49 kann in gleicher Weise zum Reaktorraum zurückführen und ist mit einem vorgeschalteten Ventil vom Kreislauf absperrbar.

Nach den Absperrventilen 52, 53 der Kondensatbehälter 36, 38 sind jeweils Hilfsgebläse 46, 47, jeweils mit einem vorgeschalteten Ventil, angeordnet.

Der gezeigte Aufbau ermöglicht die Durchführung des erfindungsgemäßen Verfahrens.

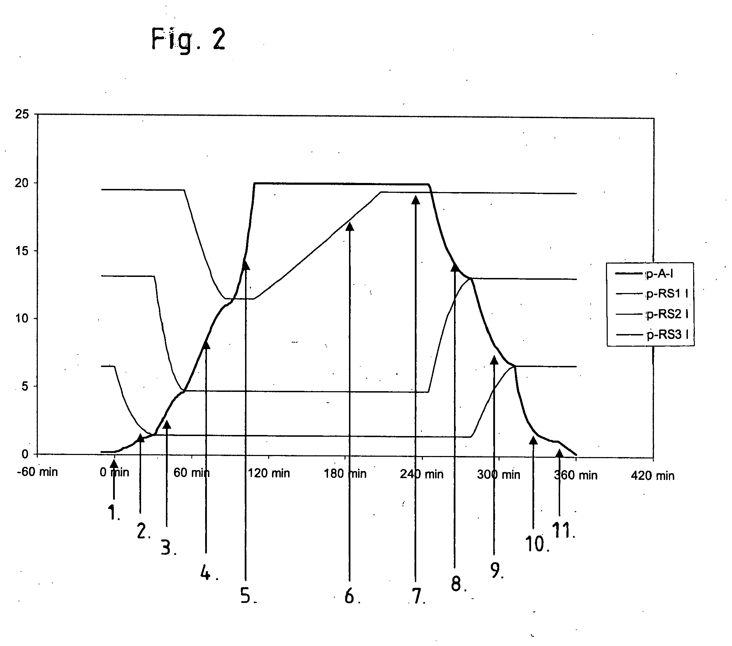

Fig. 2 zeigt ein Beispiel eines Druck-Zeit-Diagramms für einen Prozessablauf. Das Beispiel bezieht sich auf einen Reaktorraum, der mit drei Dampfspeichern zusammenwirkt. Die einzelnen Zeitabschnitte 1 bis 11 werden im Folgenden kurz erläutert:
- Zu 1:: Bei Prozessbeginn ist der Reaktorraum mit Biomasse beladen, drucklos und die Beladungsklappe wird verschlossen. Die drei Speicher befinden sich in den jeweils gezeigten Druckzuständen, wobei drei Speicher mit unterschiedlichen Druckniveaus verwendet werden.
- Zu 2:: Durch Öffnen des Ventils der Ventilgruppe 40 wird Dampf aus dem Speicher 33 in den Reaktorraum 31 eintreten, bis ein Druckausgleich vorliegt. Durch vollständiges geregeltes oder ungeregeltes Öffnen des Ventils wird ein schnelles Aufheizen erreicht. Das Kondensat des Reaktorraumes wird über den Kondensatbehälter 36 abgeführt. Bei Druckausgleich wird das Ventil wieder geschlossen.
- Zu 3:: Durch Öffnung des entsprechenden Ventils der Ventilgruppe 40 wird dann der Druck aus dem Speicher 34 in gleicher Weise in den Reaktorraum geführt.
- Zu 4:: Gleiches erfolgt dann durch Verbindung des Reaktorraumes mit dem Speicher 35.
- Zu 5:: Alle Ventile sind wieder geschlossen, die Reaktionswärme erhöht im Reaktorraum 31 die Temperatur und den Druck. Mit Erreichen des Zielwertes ist die Aufheizphase abgeschlossen.
- Zu 6:: Zur Begrenzung des Drucks im Reaktorraum 31 werden die Ventile geregelt geöffnet. Zunächst wird der Dampf aus dem Reaktorraum 31 wieder in den Speicher 35 zurückgeführt. Dort erhöht sich folglich der Druck. Wird der
- Zu 7:: Ausgangsdruck, also der Druck, der im Speicher 35 zu Prozessbeginn vorlag, wieder erreicht, wird das Ventil geschlossen. Der Druck wird nun in dieser Phase gehalten und im Falle des Entstehens eines Überschusses über das Ventil 42 Dampf abgeführt.
- Zu 8:: Nach Abschluss der Reaktion wird wieder das entsprechende Ventil geöffnet, so dass der Expansionsdampf in den Speicher 34 rückströmt. Der Zielwert ist der Druck, den der Speicher 34 zu Prozessbeginn hatte. Durch geregeltes oder ungeregeltes Öffnen des Ventils wird ein schnelles Expandieren und Abkühlen des Reaktionsraumes 31 erreicht. Mit der Aufnahme des Expansionsdampfes in Speicher 34 wird eine nachhaltige Verbesserung der Energiebilanz durch Vermeidung von Expansionsdampfverlusten erreicht. Gleichfalls wird die Emission von Fremdstoffen in die Umgebung vermieden.
- Zu 9:: Schlussendlich wird, wenn der Speicher 34 wieder aufgefüllt ist, das entsprechende Ventil geschlossen und das Ventil der Gruppe 40 geöffnet, das den Reaktorraum 31 mit dem Speicher 33 verbindet. Es erfolgt dann auch hier eine Befüllung bis zum Ausgangsdruck. Das geregelte oder ungeregelte Öffnen ermöglicht wiederum eine schnelle Expansion und ein Abkühlen des Reaktorraums. Mit der Aufnahme des Expansionsdampfes in Speicher 33 wird eine nachhaltige Verbesserung der Energiebilanz durch Vermeidung von Expansionsdampfverlusten erreicht.
- Zu 10:: Durch Öffnen des Ventils 42, wenn erforderlich, wird der Reaktorraum 31 wieder auf Umgebungsdruck expandiert. Der über das Ventil 42 abgezogene Dampf kann zu Heizzwecken verwendet werden, beispielsweise zur Vorwärmung der Biomasse vor Einbringung in den Reaktorraum und dergleichen. Es können das Hilfsgebläse 46 ebenfalls eingesetzt werden, um in der Schlussphase eine möglichst schnelle Expansion und Rückkühlung zu bewirken.
- Zu 11:: Nach vollständiger Expansion des Reaktorraums 31 wird die Beladungsklappe wieder geöffnet, die Biokohle entnommen und der Reaktorraum erneut für den Start zum nächsten Prozess vorbereitet und beladen.

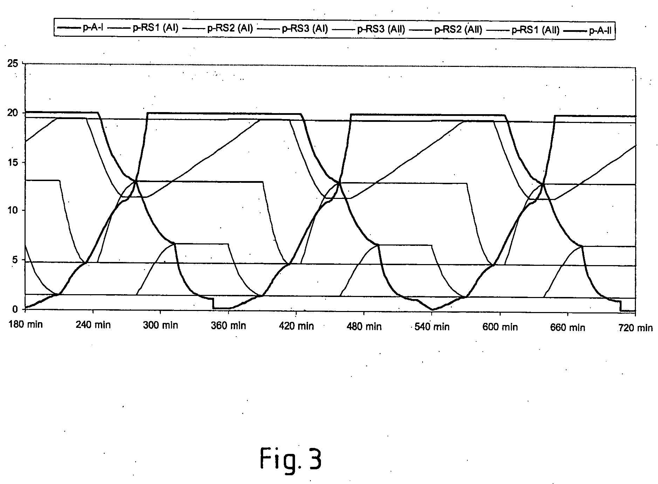

In Fig. 3 ist eine Zeitphase zwischen 180 und 720 Minuten für den parallelen Betrieb zweier Reaktorräume, beispielsweise 31 und 32 wie in Fig. 1 gezeigt, aufgezeigt als Druck über die Zeit. Die unter der Figur stehende Legende zeigt deutlich, dass das wie in Fig. 2 für einen Reaktorraum gezeigte Basisdiagramm sich phasenverschoben vollständig auf zwei Reaktorräume übertragen lässt. Dies führt zu einer über die Zeit optimale Nutzung der vorhandenen Dampfmengen, Drücke und Temperaturen, so dass durch die Phasenverschiebung eine Art Pumpbetrieb zwischen zwei Reaktorräumen und drei Speichern durchgeführt wird. Auf diese Weise kann ein nahezu kontinuierlicher Prozess realisiert werden.

Der Phasenversatz liegt bei einer etwa halben Zyklusdauer. Bei einer Zyklusdauer von 360 Minuten wird also der Reaktorraum zwei 180 Minuten nach Beginn des ersten Zyklus gestartet. Die entsprechenden Speicher werden pro Zyklus jeweils ein zweites Mal in der oben beschriebenen Weise unter Last gesetzt, man spricht vom sogenannten Lastspiel. Die Anzahl der aktiven Arbeitsphasen der Speicher verdoppelt sich. Während in der Beschreibung zu Fig. 2 ein Betrieb vorliegt, bei dem der Speicher nur ein Lastspiel durchläuft, wird bei Betrieb von zwei Reaktorräumen jeder Speicher während der inaktiven Phase des einen Reaktorraumes mit dem Entlade- und Beladevorgang im Zusammenhang mit dem zweiten Reaktorraum eingesetzt.

Für die eingesetzten - nicht gezeigten - Regelkreise bedeutet dies, dass die Signale der Drucksensoren an den Speichern im Wechsel auf die Steuerung der Ventile einwirken.

Die beschriebenen Ausführungsbeispiele dienen nur der Erläuterung und sind nicht beschränkend.

### Bezugszeichenliste

1 Prozessphase
2 Prozessphase
3 Prozessphase
4 Prozessphase
5 Prozessphase
6 Prozessphase
7 Prozessphase
8 Prozessphase
9 Prozessphase
10 Prozessphase
11 Prozessphase
30 Carbonisierungsanlage
31 Reaktorraum
32 Reaktorraum
33 Speicher
34 Speicher
35 Speicher
36 Kondensatbehälter
37 Kondensatableiter
38 Kondensatbehälter
39 Kondensatableiter
40 Ventilgruppe
41 Ventilgruppe
42 Ventil
43 Ventil
44 Ventil
45 Heizmittelanschluss
46 Hilfsgebläse
47 Hilfsgebläse
48 Kondensatumwälzpumpe
49 Kondensatumwälzpumpe
50 Abschlemmung
51 Abschlemmung
52 Ventil
53 Ventil
54 Rückleitung

## Patentansprüche

1. Verfahren zur Carbonisierung von Biomasse in einem Reaktionsraum (31, 32) unter Verwendung von Dampf zur Bereitstellung der erforderlichen Temperatur- und Druckwerte, wobei der Reaktionsraum (31, 32) mit wenigstens zwei Ruthsspeichern (33, 34, 35) strömungstechnisch verbindbar betrieben wird, und wobei je nach Verfahrensphase Dampf vom Reaktionsraum (31, 32) in wenigstens einen der Ruthsspeicher (33, 34, 35) oder von wenigstens einem der Ruthsspeicher (33, 34, 35) in den Reaktionsraum (31, 32) geleitet wird, wobei die wenigstens zwei Ruthsspeicher (33, 34, 35) mit unterschiedlichem Druck betrieben werden.

2. Verfahren nach Anspruch 1, **dadurch gekennzeichnet, dass** den Ruthsspeicher (33, 34, 35) vor Verfahrensbeginn Dampf mit vorgegebenen Druck vorgelegt wird.

3. Verfahren nach einem der vorhergehenden Ansprüche, **dadurch gekennzeichnet, dass** der Reaktionsraum (31, 32) mit drei Ruthsspeichern (33, 34, 35) strömungstechnisch verbindbar betrieben wird.

4. Verfahren nach Anspruch 3, **dadurch gekennzeichnet, dass** jeder der angeschlossenen Ruthsspeicher (33, 34, 35) mit unterschiedlichem Druck betrieben wird.

5. Verfahren nach einem der vorhergehenden Ansprüche, **dadurch gekennzeichnet, dass** der Reaktionsraum (31) mit wenigstens einem zweiten Reaktionsraum (32) strömungstechnisch verbindbar betrieben wird.

6. Verfahren nach einem der Ansprüche 1 bis 5, **dadurch gekennzeichnet, dass** das aus dem Reaktionsraum (31, 32) abgezogene säurehaltige Kondensat zur Reaktionsunterstützung in den Reaktionsraum (31, 32) zurückgeführt und auf die reagierende Masse aufgegeben wird.

7. Carbonisierungsanlage zur Carbonisierung von Biomasse in einem Reaktionsraum (31, 32) nach dem Verfahren nach wenigstens einem der Ansprüche 1 bis 6, aufweisend wenigstens zwei Ruthsspeicher (33, 34, 35) als Dampfspeichereinheiten, wobei die Ruthsspeicher (33, 34, 35) über eine ansteuerbare Ventilgruppe (40, 41) jeder für sich mit dem Reaktionsraum (31, 32) strömungstechnisch verbindbar sind, wobei die Ruthsspeicher (33, 34, 35) mit unterschiedlichem Druck betreibbar sind, **dadurch gekennzeichnet, dass** bei der Carbonisierung im Reaktionsraum (31, 32) anfallendes Kondensat über eine Konditionierung in den Reaktionsraum (31, 32) zurückfühbar ist, zu welchem Zweck der Reaktionsraum (31, 32) einen Kondensatableiter (37, 39) aufweist, welcher in einen Kondensatbehälter (36, 38) führt, der einerseits über ein Ventil (52, 53) absperrbar ist, andererseits über ein Ventil (50, 51) abgeschlemmt werden kann, wobei das Kondensat mittels einer mit einem vorgeschalteten Ventil betreibbaren Kondensatumwälzpumpe (48, 49) über eine Leitung (54) in den Reaktionsraum (31, 32) rückführbar und auf die reagierende Biomasse aufgebbar ist.

8. Carbonisierungsanlage nach Anspruch 7, **dadurch gekennzeichnet, dass** diese mindestens zwei Reaktionsräume (31, 32) und mindestens drei Ruthsspeicher (33, 34, 35) umfasst.

## Claims

1. Method for carbonation of biomass inside a reaction chamber (31, 32) by the use of steam for providing the required temperature and pressure values, said reaction chamber (31, 32) being operated with at least two fluidically connectable Ruths accumulators (33, 34, 35), wherein steam from the reaction chamber (31, 32) is fed into one said Ruths accumulators (33, 34, 35) or from at least one of said Ruths accumulators (33, 34, 35) into the reaction chamber (31, 32), depending on the stage of the process, said at least two Ruths accumulators (33, 34, 35) being operated at a different pressure.

2. Method according to claim 1, **characterized in that** steam at a specified pressure is supplied to the Ruths accumulators (33, 34, 35) before commencement of the process.

3. Method according to any one of the preceding claims, **characterized in that** the reaction chamber (31, 32) is operated so that it can be fluidically connected to three Ruth accumulators (33, 34, 35).

4. Method according to claim 3, **characterized in that** each of the connected Ruths accumulators (33, 34, 35) is operated at a different pressure.

5. Method according to any one of the preceding claims, **characterized in that** the reaction chamber (31) is operated so that it can be fluidically connected to at least one second reaction chamber (32).

6. Method according to any one of the claims 1 to 5, **characterized in that** the acidic condensate discharged from the reaction chamber (31, 32) is returned to the reaction chamber (31, 32) and supplied to the reactive mass to support the reaction.

7. Device for carbonation of biomass inside a reaction chamber (31, 32) by the method of at least one of claims 1 to 6, the device comprising at least two Ruths accumulators (33, 34, 35) as steam accumulation units, said Ruths accumulators (33, 34, 35) being individually fluidically connectable to the reaction chamber (31, 32) via a controllable valve group (40, 41), wherein said Ruths accumulators (33, 34, 35) can be operated at a different pressure, **characterized in that** condensate occurring during carbonation in the reaction chamber (31, 32) can be returned to the reaction chamber (31, 32) through conditioning, for which purpose the reaction chamber (31, 32) includes a steam trap (37, 39) which leads into a condensate container (36, 38) that can be shut off via a valve (52, 53) on the one hand and decanted via a valve (50, 51) on the other hand, wherein the condensate can be returned to the reaction chamber (31, 32) via a pipe (54) by means of a condensate recirculation pump (48, 49) operable with an upstream valve and can be supplied to the reacting biomass.

8. Device for carbonation according to claim 7, **characterized in that** the same comprises at least two reaction chambers (31, 32) and at least three Ruths accumulators (34, 35).

## Revendications

1. Procédé de carbonisation de biomasse à l'intérieur d'une chambre de réaction (31, 32) par l'utilisation de vapeur pour fournir les valeurs de température et de pression requises, ladite chambre de réaction (31, 32) fonctionnant avec au moins deux accumulateurs Ruth (33, 34, 35) pouvant être reliés fluidiquement, la vapeur provenant de la chambre de réaction (31, 32) étant introduite dans l'un desdits accumulateurs Ruth (33, 34, 35) ou conduite d'au moins un desdits accumulateurs Ruth (33, 34, 35) dans la chambre de réaction (31, 32), selon l'étape du processus, lesdits au moins deux accumulateurs Ruth (33, 34, 35) fonctionnant à une pression différente.

2. Procédé selon la revendication 1, **caractérisé en ce que** de la vapeur à une pression spécifiée est fournie aux accumulateurs Ruth (33, 34, 35) avant le début du processus.

3. Procédé selon l'une quelconque des revendications précédentes, **caractérisé en ce que** la chambre de réaction (31, 32) est actionnée de manière à pouvoir être reliée fluidiquement à trois accumulateurs Ruth (33, 34, 35).

4. Procédé selon la revendication 3, **caractérisée en ce que** chacun des accumulateurs Ruth (33, 34, 35) connectés est actionné à une pression différente.

5. Procédé selon l'une quelconque des revendications précédentes, **caractérisé en ce que** la chambre de réaction (31) est actionnée de manière à pouvoir être reliée fluidiquement à au moins une deuxième chambre de réaction (32).

6. Procédé selon l'une quelconque des revendications 1 à 5, **caractérisé en ce que** le condensat acide évacué de la chambre de réaction (31, 32) est renvoyé dans la chambre de réaction (31, 32) et est fourni à la masse réactive pour aider la réaction.

7. Dispositif de carbonisation de biomasse à l'intérieur d'une chambre de réaction (31, 32) selon le procédé d'au moins une des revendications 1 à 6, le dispositif comprenant au moins deux accumulateurs Ruth (33, 34, 35) comme unités d'accumulation de vapeur, lesdits accumulateurs Ruth (33, 34, 35) pouvant être reliés individuellement de manière fluidique à la chambre de réaction (31, 32) par l'intermédiaire d'un groupe de vannes (40, 41) pouvant être commandé, lesdits accumulateurs Ruth (33, 34, 35) pouvant être actionnés à une pression différente, **caractérisé en ce que** le condensat se produisant lors de la carbonisation dans la chambre de réaction (31, 32) peut être renvoyé dans la chambre de réaction (31, 32) par conditionnement, et pour ce faire, la chambre de réaction (31, 32) comprend un purgeur de vapeur (37, 39) qui débouche dans un récipient de condensat (36, 38) pouvant être fermé par une vanne (52, 53) d'une part et décanté par une vanne (50, 51) d'autre part, le condensat pouvant être renvoyé dans la chambre de réaction (31, 32) par une conduite (54) au moyen d'une pompe de recirculation du condensat (48, 49) pouvant être actionnée par une vanne en amont et pouvant être acheminé vers la biomasse en réaction.

8. Dispositif de carbonisation selon la revendication 7, **caractérisé en ce qu'**il comprend au moins deux chambres de réaction (31, 32) et au moins trois accumulateurs Ruth (34, 35).
